Europäisches Patentamt

European Patent Office

Office européen des brevets

(19)

11 Publication number:

**0 060 507**

**B1**

(12) **EUROPEAN PATENT SPECIFICATION**

(45) Date of publication of patent specification: **23.07.86**

(51) Int. Cl.⁴: **F 16 L 27/08, E 21 B 43/26**

(21) Application number: **82101911.4**

(22) Date of filing: **10.03.82**

(54) Equipment adaptable to telescoping service line.

(30) Priority: **16.03.81 US 243679**

(43) Date of publication of application:
**22.09.82 Bulletin 82/38**

(45) Publication of the grant of the patent:
**23.07.86 Bulletin 86/30**

(84) Designated Contracting States:
**AT DE FR GB IT NL**

(56) References cited:
**FR-A-1 521 869**
**US-A-2 746 773**
**US-A-3 396 852**
**US-A-3 942 554**

(73) Proprietor: **FMC CORPORATION**
**200 East Randolph Drive**
**Chicago Illinois 60601 (US)**

(72) Inventor: **Jameson, Neal Ellis**
**3027 Ranchview Drive**
**Orange California 92665 (US)**

(74) Representative: **Bardehle, Heinz, Dipl.-Ing.**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

## Description

### Field of the Invention

This invention relates to a telescoping boom supported service line for use in well service operations to interconnect a supply of pressurized fluid to a wellhead according to the precharacterizing part of claim 1 as known from US—A—3942554.

### Description of the Prior Art

During the course of producing fluids from a petroleum well it is often desirable or necessary to subject the well to a treatment procedure in order to stimulate its fluid production. This procedure usually involves the injection of fluid under high pressure, such as 14 kp/mm$^2$ to fracture the producing earth formations, or the injection of an acid solution to dissolve or otherwise remove obstructing material, thereby increasing the flow of petroleum from the formation into the well. In order to carry out these well stimulation procedures, it is commonplace to employ an articulated pipe assembly, called a service line, to conduct the fluid from the pump system to the wellhead. Such a service line usually comprises a plurality of straight lengths of rigid pipe interconnected end-to-end by pipe swivel joints, and sufficient pipe unions to facilitate this assembly into sections that can be handled manually.

Where a pipe of larger than normal diameter and thus of greater weight is used in order to increase the volume of fluid injected into the well at a given time period, or to reduce the time for injecting a given fluid volume, additional personnel and/or time are required to unload the service line sections from their transport, assemble them and connect the line to the wellhead and then disassemble the line and reload the sections upon completion of fluid injection.

Another disadvantage of a conventional service line is that it rests unrestrained on the ground between the transport and the wellhead and thus is free to whip about and possibly injure personnel or equipment if it breaks under pressure.

The service line shown from US—A—3 942 554 and taken into consideration in the precharacterizing part of claim does not allow a movement of pipe carriers along the boom consisting of different boom sections having different widths.

### Summary of the Invention

The present invention overcomes the foregoing disadvantages by a service line as defined by claim 1, particularly by providing an articulated well service pipe line mounted on and supported at all times by a mobile telescoping boom assembly that can be extended from its transport base to carry the service line to a wellhead for connection thereto, all in a relatively easy, quick, efficient and safe manner. The service line pipe sections are pivotally connected on the boom sections in completely assembled condition so that they extend from and retract into their rest or stowed position in an accordion-like manner, and thus are compactly stowable yet readily extendable without need for any manual effort as required by conventional service equipment. The service line can be mounted alongside the boom so that the pipe sections reside in generally vertical planes or the pipe sections can be mounted in other functional attitudes.

The telescoping boom assembly is mounted on a turret for pivotal movement thereon about a horizontal axis, and the turret can revolve upon the pedestal main frame about a vertical axis. The entire apparatus can be mounted on a subframe platform with extendable stabilizing outriggers and installed on a suitable truck chassis or trailer for transportation to various job sites.

The pipe sections are supported by a plurality of pipe carriers which roll along the upper edge of the generally horizontal boom assembly. Each of the pipe carriers includes a cradle which supports one of the pipe sections. An outer portion of the service line rests on the cradle of an outboard pipe carrier until the outboard carriers moves to the outer end of the boom assembly. The outer portion of the service line can be lifted from the cradle and moved further away from the outer end of the boom assembly and other means used to support the outer portion of the service line. Clamping means can be used to secure the pipe sections to the cradles of the pipe carriers. A breaking means is used to secure the pipe carriers in fixed positions along the boom assembly while the service line is in use.

### Brief Description of the Drawings

Figure 1 is a diagrammatic side elevation of a telescoping boom supported articulated service line according to the present invention, showing the boom extended from a support and resting on a jack stand near a wellhead, and the service line extended along the boom.

Figure 2 is a plan view of the boom and service line shown in Figure 1.

Figure 3 is an enlarged plan view of a pipe carrier which moves along the top of the boom assembly.

Figure 4 is a sectional view taken along the line 4—4 of Figure 3.

Figure 5 is a side elevation of the pipe carrier of Figures 3 and 4.

Figure 6 is another embodiment of a brake mechanism shown in Figures 4 and 5.

### Description of the Preferred Embodiment

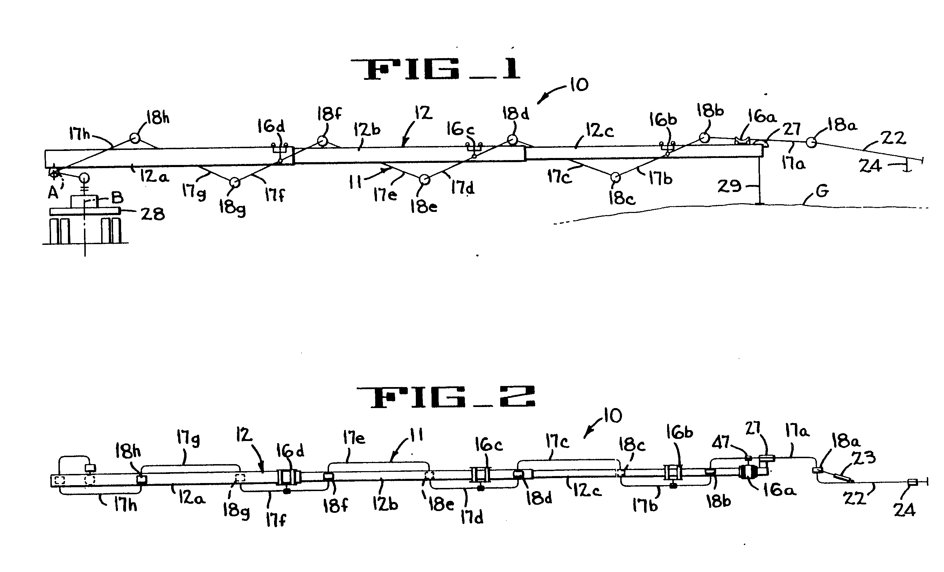

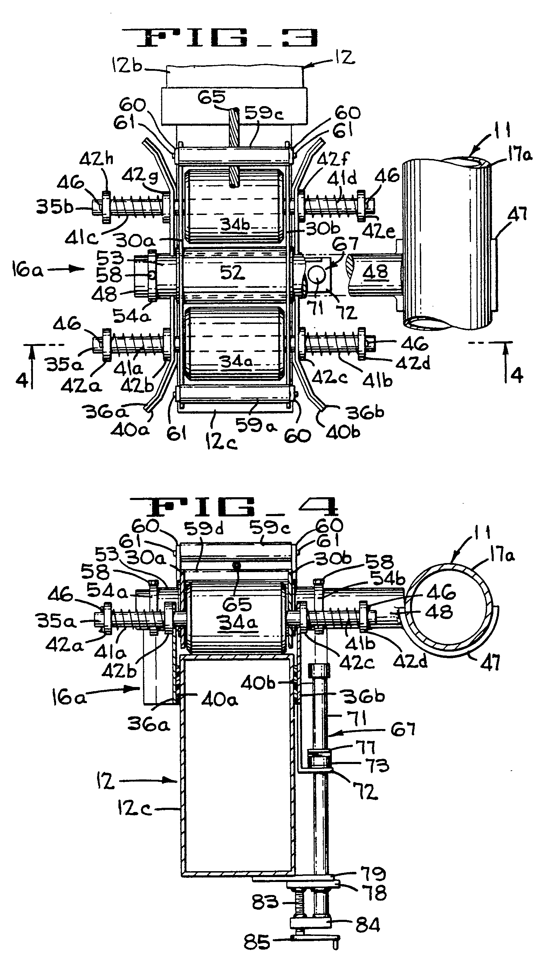

As shown in Figures 1 and 2, a telescoping boom supported articulated service line 10 according to the present invention comprises an articulated service line assembly 11 pivotally mounted on a telescoping boom assembly 12 by a plurality of pipe carriers 16a—16d. The service line assembly 11 comprises a plurality of straight rigid pipe sections 17a—17h of generally equal length, and a plurality of pipe swivel joints 18a—18h that pivotally interconnect the pipe sections 17a—17h in an end-to-end manner.

At the outer end of the service line assembly 11 is a connector pipe 22 pivotally connected to the service line assembly by the pipe swivel joint 18a for rotation in a vertical plane by a hydraulic elevating cylinder 23 (Fig. 2). A skid 24 mounted on the outer end of the connector pipe 22 supports the outer end of the pipe 22 for sliding movement over the surface of the ground.

The telescoping boom assembly 12 (Figs. 1, 2) comprises three boom sections 12a, 12b and 12c. The inner section 12a, which is not extendable, is pivotally mounted on a transport vehicle 28 for rotation in a vertical plane about a horizontal axis A and in a horizontal plane about a vertical axis B. The details of the telescoping boom assembly 12, and of the means for operating it, are not critical to the present invention, which can in fact use telescoping boom assemblies such as described in US—A—3,841,494 and US—A—4,016,688.

An adjustable jack stand 29 can be positioned at the tip of the boom assembly 12 to provide an additional end support to relieve the boom of cantilever loading during the fluid transfer operation. The jack stand can be pivotally connected, in a removable manner or otherwise to the tip of the boom assembly on the outer end of the boom section 12c. Thus, the jack stand can be a separate portable apparatus, or can be carried by the boom to lessen the manual effort required to install and remove it. The articulated service line is shown in Figure 2 as having a single service line assembly, but a dual line assembly could be provided with a service line assembly on each side of the boom assembly 12.

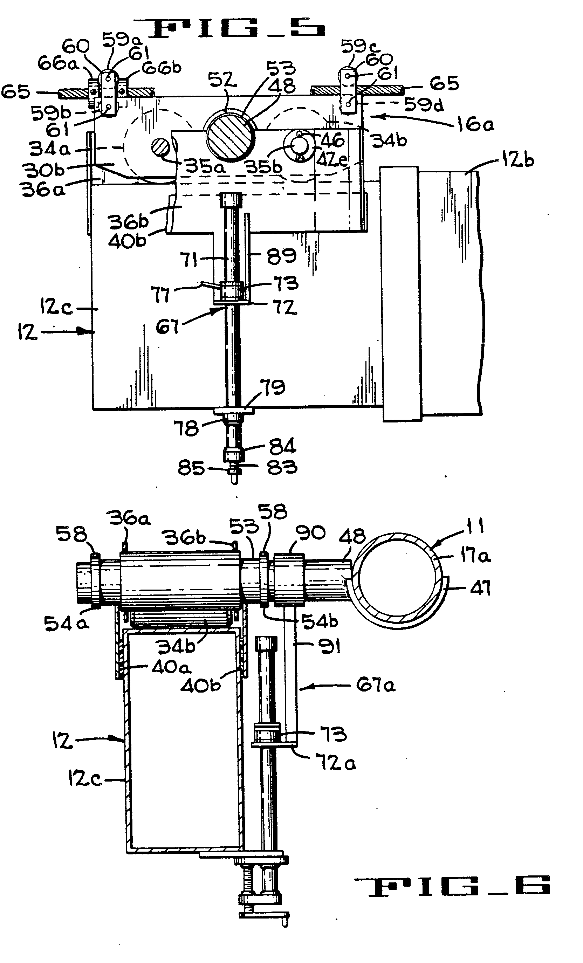

A pipe support bracket 27 (Figs. 1, 2) provides support for the outer pipe section 17a to allow the service line assembly 11 to be extended beyond the outer end of the boom assembly 12. With the boom assembly in the fully extended position, the outer pipe carrier 16a transports the pipe section 17a along the boom sections 12a, 12b to the outer end of the section 12c, where the pipe carrier stops. If the adjacent pipe carrier 16b and the pipe section 17b continue to move to the right (Figs. 1, 2) the outer pipe section 17a slides over the support bracket 27 and the weight of the connector pipe 22 causes the pipe section 17a to tilt about the support 27 with the pipe swivel joint 18b moving upward (Fig. 1) causing the pipe section 17a to be lifted out of the cradle 47 (Fig. 4) of the carrier 16a. The skid 24 rests on the ground G to support the outer end of the connector pipe 22 and the bracket 27 supports the pipe section 17a as the service line assembly 11 continues to move beyond the outer end of the boom assembly 12.

Details of the pipe carrier 16a are shown in Figures 3—6 where the carrier includes a pair of elongated side plates 30a, 30b and a pair of rollers 34a, 34b rotatably mounted on a pair of shafts 35a, 35b extending through the side plates. A pair of backing plates 36a, 36b mounted adjacent the side plates 30a, 30b each have a low friction material 40a, 40b, such as nylon mounted between the plates 36a, 36b and the boom sections 12a—12c (Figs. 4, 6) to keep the pipe carriers centered over the boom sections 12a—12c while moving freely along the length of the boom assembly 12. The backing plates 36a, 36b are biased toward the side plates 30a, 30b by a plurality of compression springs 41a—41d (Fig. 3) each mounted between a pair of washers 42a—42h. The washers are retained on the shafts by a plurality of cotter pins 46 each mounted through an end portion of the shafts 35a, 35b.

A cradle 47 for holding one of the pipe sections 17a—17h is connected to the side plates 30a, 30b of the pipe carrier (Figs. 3—6) by a shaft 48 mounted in a sleeve 52. The sleeve 52 is welded or otherwise connected to the side plates 30a, 30b and the shaft 48 is welded to the cradle 47. Another sleeve 53, made of low friction material such as nylon, is mounted between the shaft 48 and the sleeve 52. A pair of annular collars 54a, 54b are secured to the shaft 48 by a pair of screws 58 to limit the axial movement of the shaft 48 inside the sleeves 52, 53. The pipe section 17a can rest in the cradle 47 for easy removal as shown in Figures 4 and 6 or a clamp (not shown) can be used to secure the pipe in the cradle 47.

A plurality of rollers 59a—59d (Fig. 5) rotatably connected to the side plates 30a, 30b by a plurality of brackets 60 and shafts 61 provide means for guiding a cable 65 along the lengths of the boom assembly 12. A pair of clamps 66a, 66b lock the cables 65 to the pipe carrier 16a so the pipe carrier can be pulled back and forth along the boom assembly 12.

The pipe carriers can be clamped to prevent movement along the boom sections 12a—12c by a brake assembly 67 (Fig. 4). The brake assembly includes a shaft 71 extending upward through a lower end portion 72 of the backing plate 36b. A pipe bar clamp 73 welded or otherwise connected to the end portion 72 secures the shaft 71 in position so the brake assembly can be clamped to any one of the boom sections 12a—12c and can be adjusted to accommodate different size boom sections. When a release lever 77 (Fig. 5) is depressed the shaft 71 is free to slide inside the bar clamp 73 to a desired position and the shaft 71 is locked to the bar clamp 73 when the lever 77 is released. A screw anchor bracket 78 and a head plate 79 are free to slide up and down the shafts 71 in response to the vertical movement of a screw 83. A clamp base 84 is welded or otherwise secured to the lower end of the shaft 71 and the screw 83 is threaded through the base 84 to move the screw 83 up or down as the handle 85 rotates the screw. The upper end of the screw 83 is rotatably connected to the anchor bracket 78 to move the bracket 78 and the plate 79 up or down when the screw 83 is turned. A brace 89 (Figs. 4, 5) connected to the backing plate 36b reinforces the lower portion 72.

Another embodiment of a brake assembly 67a (Fig. 6) includes a bracket 72a secured to the shaft 48 of the pipe carrier 16a by a collar 90 and a bar 91. The pipe bar clamp 73 is welded or otherwise secured to the bracket 72a.

The present invention includes a telescoping boom supported articulated service line having means for supportively extending the service line beyond the outer end of the boom. The service line is carried along the boom by a plurality of pipe carriers having means for locking the pipe carriers to booms of different sizes and the carriers each include a cradle for supporting the pipe and for removing the pipe quickly from the carrier when desired.

**Claims**

1. A telescoping boom supported articulated service line (10) for use in well service operations to interconnect a supply of pressurized fluid to a wellhead, comprising
a telescoping boom assembly (12) having a plurality of boom sections (12a, 12b, 12c) with an inboard boom section (12a) mounted on a transport vehicle and with the other boom section (12b, 12c) extendable outwardly from said inboard boom section (12a), said boom sections (12a, 12b, 12c) having a variety of widths, and
an articulated pipe service line (11),
characterized by
a plurality of pipe carriers (16a—16d) mounted for movement along the length of said boom assembly (12) with said carriers (16a—16d) movable from one boom section (12a, 12b, 12c) to another along said boom assembly (12),
means (36a, 36b, 40a, 40b, 41a—41d) for centering said pipe carriers (16a—16d) over each of the varying width boom sections (12a, 12b, 12c) as said pipe carriers (16a—16d) move freely along the length of said boom assembly (12), and
means for connecting said service line (11) to said pipe carriers (16a—16d) for moving said service line (11) between an extended position and a retracted position as said pipe carriers (16a—16d) move along the length of said boom assembly (12).

2. A boom supported service line as defined in claim 1 including an outboard pipe carrier (16a), said outboard pipe carrier (16a) having means (27) for supporting an outer portion (17a) of said service line (11) as said outer portion (17a) is moved along said boom assembly (12), and means (22, 17a, 27, 18b, 47) for releasing said outer portion (17a) of said service line (11) when said outboard pipe carrier (16a) reaches the outer end of said boom assembly (12).

3. A boom supported service line as defined in claim 2 including means (24) for supporting said outer portion (17a) of said service line (11) when said service line (11) is released from said pipe carrier (16a) and for extending said outer portion (17a) beyond the outer end of said boom assembly (12).

4. A boom supported service line as defined in claim 1 including braking means (67) for selectively locking said pipe carriers (16a—16d) to said boom assembly (12).

5. A boom supported service line as defined in claim 1 wherein each of said pipe carriers (16a—16d) includes a pair of rollers (34a, 34b) for supporting said carrier for rolling movement along the length of said boom assembly (12).

6. A boom supported service line as defined in claim 1 including braking means (67) for selectively locking said pipe carriers (16a—16d) to boom assemblies (12) having a variety of cross-sectional sizes.

7. A boom supported service line as defined in claim 6 wherein said braking means (67) includes a coarse adjustment means (71, 72, 73, 77) for adapting said braking means (67) to different size boom assemblies (12) and a fine adjustment means (78, 79, 83, 84, 85) for locking said pipe carriers (16a—16d) to said boom assemblies (12).

8. A boom supported service line as defined in claim 1 including a skid (24) mounted at the outer end of said service line (11) to support the outer end of said service line (11) and a support bracket (27) mounted at the outer end of said boom assembly (12) for lifting said service line (11) from an outer pipe carrier (16a) and for supporting an outer portion of said service line (11) as said service line (11) is extended beyond said outer end of said boom assembly (12).

9. A boom supported service line as defined in claim 1, including means (47, 48) for connecting said service line (11) to said pipe carriers (16a—16d) to support said service line (11) substantially at the level of said pipe carriers (16a—16d).

10. A boom supported service line as defined in claim 1, wherein said centering means includes a pair of backing plates (36a, 36b) extending downwardly from each of said pipe carriers (16a—16d) with one of said backing plates (36a, 36b) on either side of said boom assembly (12) with each of said backing plates (36a, 36b) substantially parallel to said boom sections (12a, 12b, 12c), a low friction material (40a, 40b) between each of said backing plates (36a, 36b) and said boom sections (12a, 12b, 12c) and spring means (41a—41d) biasing said backing plates (36a, 36b) against said boom sections (12a, 12b, 12c) to thereby center said pipe carriers (16a—16d) across the width of each of said boom sections (12a, 12b, 12c) as said carriers (16a—16d) move along the length of said boom assembly (12).

**Patentansprüche**

1. Mit einem Teleskopausleger gestützte gelenkige Einsatz-Pipeline (10) zur Verwendung bei Bohrloch-Servicearbeiten, um eine Quelle von Druckfluid an einen Bohrlochkopf anzuschließen, mit einer Teleskop-Auslegeranordnung (12) mit einer Vielzahl von Auslegerabschnitten (12a, 12b, 12c), wobei der innen liegende Auslegerabschnitt (12a) an einem Transportfahrzeug angebracht ist und der andere Auslegerabschnitt (12b, 12c) vom innen liegenden Abschnitt (12a) her auswärts ausfahrbar ist, und wobei die Auslegerabschnitte (12a, 12b, 12c) unterschiedlich breit sind und eine gelenkige Einsatz-Pipeline (11) vorgesehen ist, gekennzeichnet durch eine Vielzahl von Rohrträgern (16a—16d), die längs der Auslegeranordnung (12) bewegbar angeordnet sind, wobei die Träger (16a—16d) von einem Auslegerabschnitt (12a, 12b, 12c) zum anderen entlang der Auslegeranordnung (12) bewegbar sind, durch eine Einrichtung (36a, 36b, 40a, 40b, 41a—41d) zum Zentrieren der Rohrträger (16a—16d) über jedem der variabel breiten Auslegerabschnitte (12a, 12b, 12c), wenn sich die Rohrträger (16a—16d) frei längs der Länge der Auslegeranordnung (12) bewegen, und durch eine Einrichtung zum Verbinden der Einsatzleitung (11) mit den Rohrträgern (16a—16d), um die Einsatzleitung (11) zwischen einer ausgefahrenen und einer eingezogenen Position zu bewegen, wenn sich die Rohrträger (16a—16d) länge der Länge der Auslegeranordnung (12) bewegen.

2. Einsatz-Pipeline nach Anspruch 1, gekennzeichnet durch einen außen liegenden Rohrträger (16a), der eine Einrichtung (27) zum Abstützen eines äußeren Teils (17a) der Einsatz-Pipeline (11) bei der Bewegung des äußeren Teils (17a) längs der Auslegeranordnung (12) aufweist, und durch eine Einrichtung (22, 17a, 27, 18b, 47) zum Freigeben des äußeren Teils (17a) der Einsatz-Pipeline (11), wenn der äußere Träger (16a) das äußere Ende der Auslegeranordnung (12) erreicht.

3. Einsatz-Pipeline nach Anspruch 2, gekennzeichnet durch eine Einrichtung (24) zum Abstützen des äußeren Teils (17a) der Einsatz-Pipeline (11), wenn letztere vom Rohrträger (16a) freigegeben wird und zum Ausfahren des äußeren Teils (17a) über das äußere Ende der Auslegeranordnung (12) hinaus.

4. Einsatz-Pipeline nach Anspruch 1, gekennzeichnet durch eine Bremseinrichtung (67) zum wahlweisen Verriegeln der Rohrträger (16a—16d) mit der Auslegeranordnung (12).

5. Einsatz-Pipeline nach Anspruch 1, dadurch gekennzeichnet, daß jeder Rohrträger (16a—16d) ein Paar Rollen (34a, 34b) aufweist, welche die Träger zwecks Rollbewegung entlang der Länge der Auslegeranordnung (12) tragen.

6. Einsatz-Pipeline nach Anspruch 1, gekennzeichnet durch eine Bremseinrichtung (67), um die Rohrträger (16a—16d) wahlweise mit Auslegeranordnungen (12) verschiedener Querschnittsabmessungen zu verriegeln.

7. Einsatz-Pipeline nach Anspruch 6, dadurch gekennzeichnet, daß die Bremseinrichtung (67) eine Grobeinstelleinrichtung (71, 72, 73, 77) zum Anpassen der Bremseinrichtung (67) an unter-schiedlich große Auslegeranordnungen (12) so-wie eine Feineinstelleinrichtung (78, 79, 83, 84, 85) zum Verriegeln der Rohrträger (16a—16d) an den Auslegeranordnungen (12) aufweist.

8. Einsatz-Pipeline nach Anspruch 1, gekennzeichnet durch einen Gleiter (24) am äußeren Ende der Pipeline (11), um das äußere Ende der Einsatz-Pipeline (11) zu stützen, und durch ein Auflager (27) am äußeren Ende der Auslegeranordnung (12), um die Einsatz-Pipeline (11) von einem äußeren Rohrträger (16a) abzuheben und einen äußeren Teil der Einsatz-Pipeline (11) abzustützen, während sie über das äußere Ende der Auslegeranordnung (12) hinaus ausgefahren ist.

9. Einsatz-Pipeline nach Anspruch 1, gekennzeichnet durch eine Einrichtung (47, 48), um die Pipeline (11) mit den Rohrträgern (16a—16d) zu verbinden und die Pipeline (11) im wesentlichen auf dem Niveau der Rohrträger (16a—16d) zu stützen.

10. Einsatz-Pipeline nach Anspruch 1, dadurch gekennzeichnet, daß die Zentriereinrichtung ein Paar Führungsplatten (36a, 36b) aufweist, die sich von jedem der Rohrträger (16a—16d) abwärts erstrecken, daß auf jeder Seite der Auslegeranordnung (12) jeweils eine der Führungsplatten (36a, 36b) angeordnet ist und jede Führungsplatte (36a, 36b) im wesentlichen parallel zu den Auslegerabschnitten (12a, 12b, 12c) verlaufen, daß zwischen jeder Führungsplatte (36a, 36b) und jedem Auslegerabschnitt (12a, 12b, 12c) ein reibungsarmes Material (40a, 40b) vorgesehen ist, und daß eine Federanordnung (41a—41) die Führungsplatten (36a, 36b) gegen die Auslegerabschnitte (12a, 12b, 12c) drückt, um somit die Rohrträger (16a—16d) über die Breite eines jeden der Auslegerabschnitte (12a, 12b, 12c) zu zentrieren, wenn sich die Rohrträger (16a—16d) längs der Länge der Auslegeranordnung (12) bewegen.

**Revendications**

1. Conduite (10) de service articulée, supportée par une flèche télescopique, à utiliser dans des opérations de service de puits pour raccorder une alimentation en fluide sous pression à une tête de puits, comprenant

un ensemble à flèche télescopique (12) comportant plusieurs sections de flèche (12a, 12b, 12c) comprenant une section de flèche intérieure (12a) montée sur un véhicule de transport et l'autre section de flèche (12b, 12c) extensible vers l'extérieur à partir de ladite section de flèche intérieur (12a), lesdites sections de flèche (12a, 12b, 12c) ayant diverses largeurs, et

une conduite de service à tuyaux articulés (11), caractérisée par plusieurs supports de tuyau (16a, 16d) montés de façon à se déplacer sur la longueur dudit ensemble à flèche (12), lesdits supports (16a—16d) étant mobiles d'une section de flèche (12a, 12b, 12c) à une autre le long dudit ensemble à flèche (12),

des moyens (36a, 36b, 40a, 40b, 41a—41d) destinés à centrer lesdits supports de tuyau (16a—16d) sur chacune des sections de flèche (12a, 12b et 12c) de diverses largeurs pendant que lesdits supports de tuyau (16a—16d) se déplacent librement sur la longueur dudit ensemble à flèche (12) et

des moyens pour raccorder ladite conduite de service (11) auxdits supports (16a—16d) de tuyau afin de déplacer ladite conduite de service (11) entre une position d'extension et une position de retrait pendant que lesdits supports (16a—16d) de tuyau se déplacent sur la longueur dudit ensemble à flèche (12).

2. Conduite de service supportée par flèche selon la revendication 1, comprenant un support de tuyau extérieur (16a), ledit support de tuyau extérieur (16a) comportant des moyens (27) destinés à supporter un tronçon extérieur (17a) de ladite conduite de service (11) alors que ledit tronçon extérieur (17a) est déplacé le long dudit ensemble à flèche (12), et des moyens (22, 17a, 27, 18b et 47) destinés à libérer ledit tronçon extérieur (17a) de ladite conduite de service (11) lorsque ledit support (16a) de tuyau extérieur atteint l'extrémité extérieure dudit ensemble à flèche (12).

3. Conduite de service supportée ·par flèche selon la revendication 2, comprenant des moyens (24) destinés à supporter ledit tronçon extérieur (17a) de ladite conduite de service (11) lorsque ladite conduite de service (11) est libérée dudit support de tuyau (16a) et pour provoquer une extension dudit tronçon extérieur (17a) au-delà de l'extrémité extérieure dudit ensemble à flèche (12).

4. Conduite de service supportée par flèche selon la revendication 1, comprenant des moyens (67) de freinage destinés à bloquer sélectivement lesdits supports de tuyaux (16a—16d) sur ledit ensemble à flèche (12).

5. Conduite de service supportée par flèche selon la revendication 1, dans laquelle chacun desdits supports (16a—16d) de tuyau comprend deux galets (34a, 34b) destinés à supporter ledit support afin qu'il puisse rouler sur la longueur dudit ensemble à flèche (12).

6. Conduite de service supportée par flèche selon la revendication 1, comprenant des moyens de freinage (67) destinés à bloquer sélectivement lesdits supports de tuyau (16a—16d) sur des ensembles à flèche (12) ayant diverses dimensions en section transversale.

7. Conduite de service supportée par flèche selon la revendication 6, dans laquelle lesdits moyens de freinage (67) comprennent des moyens (71, 72, 73, 77) de réglage grossier destinés à adapter lesdits moyens de freinage (67) à des ensembles à flèche (12) de différentes dimensions, et des moyens de réglage fin (78, 79, 83, 84, 85) destinés à bloquer lesdits supports de tuyau (16a—16d) sur lesdits ensembles à flèche (12).

8. Conduite de service supportée par flèche selon la revendication 1, comprenant un patin (24) monté à l'extrémité extérieure de ladite conduite de service (11) pour supporter l'extrémité extérieure de ladite conduite de service (11) et une console (27) de support montée à l'extrémité extérieure dudit ensemble à flèche (12) pour soulever ladite conduite de service (11) d'un support de tuyau extérieur (16a) et pour supporter un tronçon extérieur de ladite conduite de service (11) pendant que ladite conduite de service (11) est un extension au-delà de ladite extrémité extérieure dudit ensemble à flèche (12).

9. Conduite de service supportée par flèche selon la revendication 1, comprenant des moyens (47, 48) de liaison de ladite conduite de service (11) auxdits supports (16a—16d) de tuyau afin que ladite conduite de service (11) soit supportée ·sensiblement au niveau desdits supports de tuyau (16a—16d).

10. Conduite de service supportée par flèche selon la revendication 1, dans laquelle lesdits moyens de centrage comprennent deux plaques d'appui (36a, 36b) se trouvant vers le bas de chacun desdits supports de· tuyau (16a—16d), l'une desdites plaques d'appui (36a, 36b) étant située sur un côté dudit ensemble à flèche (12), chacune desdites plaques d'appui (36a, 36b) étant sensiblement parallèle auxdites sections de flèche (12a, 12b, 12c), une matière à faible frottement (40a, 40b) entre chacune desdites plaques d'appui (36a, 36b) et les sections de flèche (12a, 12b, 12c, 12d) et des moyens à ressort (41a—41d) rappelant lesdites plaques d'appui (36a, 36b) contre lesdites sections de flèche (12a, 12b, 12c) pour centrer ainsi lesdits supports de tuyau (16a—16d) sur la largeur de chacune desdites sections de flèche (12a, 12b, 12c) pendant que lesdits supports (16a, 16d) se déplacent sur la longueur dudit ensemble à flèche (12).

# FIG_1

# FIG_2

0 060 507

0 060 507

# FIG_3

# FIG_4

2

FIG_5

FIG_6